# DEMANDE DE BREVET EUROPEEN

(11) **EP 1 834 710 A2**
(43) Date de publication de la demande: **19.09.2007**
(21) Numéro de dépôt: 07290325.5
(22) Date de dépôt: 16.03.2007
(51) Int. Cl.: B08B 9/093, B09B 3/00

(54) **Installation pour la dégradation de produits organiques**

(30) Priorité: 16.03.2006 FR 0602329
(71) Demandeur: VEOLIA PROPRETE, 92000 Nanterre (FR)
(72) Inventeur: Jaquot, Jaques, 95120 Ermont (FR)
(74) Mandataire: Pichat, Thierry

(57) **Abrégé**

L'invention concerne une installation pour réaliser une dégradation biologique d'un ensemble de produits organiques, comprenant une cuve 2 délimitée au moins par une paroi 211 latérale et une paroi 212 de fond. La cuve 2 comprend au moins une ouverture d'entrée et au moins une ouverture de sortie.

Selon l'invention, l'installation comprend des moyens, incluant par exemple une pompe 281, pour refouler sélectivement les produits organiques d'au moins une ouverture 231, 241, 242 d'entrée ou de sortie vers au moins une autre ouverture 231, 241, 242 d'entrée ou de sortie.

## Description

La présente invention concerne, de façon générale, le domaine de la dégradation de produits organiques, et plus particulièrement de déchets organiques pouvant contenir des matières inertes indésirables.

Plus précisément, l'invention concerne une installation pour réaliser une dégradation biologique d'un ensemble de produits organiques, comprenant une cuve délimitée au moins par une paroi latérale et une paroi de fond, ladite cuve comprenant au moins une ouverture d'entrée et au moins une ouverture de sortie.

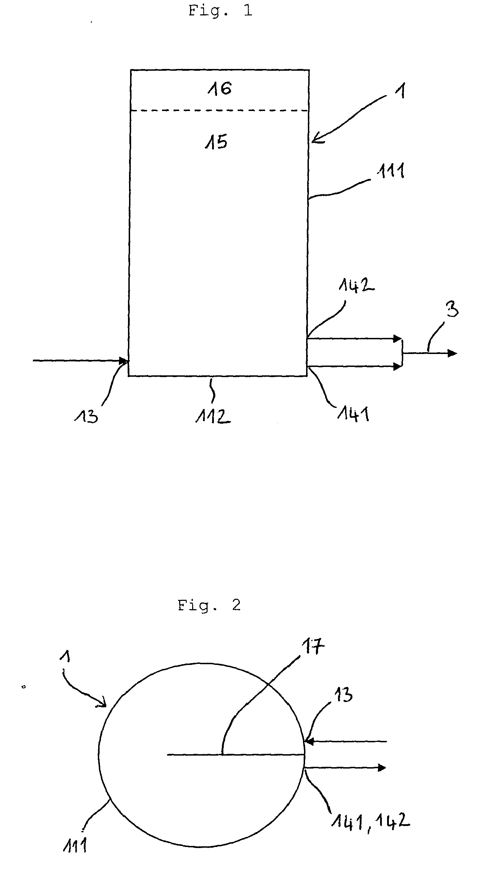

Une telle installation est connue de l'homme du métier et est représentée schématiquement en vue de côté à la figure 1.

Est représentée une cuve 1 délimitée au moins par une paroi latérale 111 et une paroi 112 de fond. La cuve 1 comprend une ouverture 13 d'entrée et deux ouvertures 141, 142 de sortie.

Une telle installation est sujette à d'importants problèmes de bouchage des ouvertures de la cuve, dus à la décantation de matières, en particulier de matières inertes indésirables, au fond de la cuve, et à la formation de talus, ou talutage, au niveau des angles formés par les parois à l'intérieur de la cuve. Ces problèmes de bouchage empêchent le bon fonctionnement de l'installation puis entraînent l'arrêt complet de l'installation.

Il faut ensuite vidanger l'installation bouchée, ce qui implique la mise en place de moyens importants coûteux. Les opérations de vidange et de curage sont techniquement difficiles et risquées.

Un autre inconvénient découlant de la décantation de matières est la réduction progressive du volume utile du digesteur dans le temps, et donc celle de la capacité de traitement de l'installation.

Dans ce contexte, la présente invention a pour but de proposer une installation exempte de l'une au moins des limitations précédemment évoquées.

L'installation de l'invention, par ailleurs conforme à la définition générique qu'en donne le préambule ci-dessus, est essentiellement caractérisée en ce qu'elle comprend des moyens pour refouler sélectivement les produits organiques d'au moins une ouverture d'entrée ou de sortie vers au moins une autre ouverture d'entrée ou de sortie.

L'invention permet d'assurer une bonne homogénéisation de la matière dans la cuve.

L'invention présente par exemple l'avantage de permettre le cas échéant le débouchage d'une ouverture de sortie en l'utilisant comme entrée.

De préférence, les moyens pour refouler les produits organiques comprennent au moins une pompe.

Dans un mode de réalisation préféré de l'invention, au moins une ouverture d'entrée et au moins une ouverture de sortie se trouvent dans des parties basse et/ou intermédiaire de la cuve, de préférence dans la partie basse de la cuve.

On divise virtuellement la cuve en hauteur en trois parties : une partie basse correspondant environ au tiers inférieur, une partie intermédiaire correspondant environ au tiers médian et une partie haute correspondant environ au tiers supérieur.

De manière avantageuse, au moins une ouverture d'entrée et au moins une ouverture de sortie se trouvent sur la paroi latérale de la cuve et de préférence dans une partie basse de la cuve.

Ces dernières ouvertures sur la paroi latérale peuvent par exemple se trouver de part et d'autre et à proximité d'une paroi interne médiane verticale, ladite paroi interne se trouvant dans la cuve.

Selon un mode de réalisation particulier de l'invention, au moins une ouverture, de préférence une ouverture de sortie, se trouve sur la paroi de fond de la cuve.

Selon une version avantageuse, au moins deux ouvertures, de préférence des ouvertures de sortie, se trouvent sur la paroi de fond et à proximité de la paroi latérale.

Selon un mode de réalisation préféré de l'invention, au moins deux ouvertures, de préférence des ouvertures de sortie, se trouvent sur la paroi de fond et de part et d'autre et à proximité d'une paroi interne médiane verticale, ladite paroi interne se trouvant dans la cuve.

De manière avantageuse, l'installation selon l'invention comprend au moins une ouverture, de préférence une ouverture d'entrée; dans une partie haute de la cuve.

D'autres caractéristiques et avantages de l'invention ressortiront clairement de la description détaillée qui en est faite ci-après, à titre indicatif et nullement limitatif, en référence aux dessins annexés dans lesquels :
- la figure 1 représente schématiquement une installation de l'état de la technique en vue de côté ;
- la figure 2 représente schématiquement une installation de l'état de la technique en vue de dessus;
- les figures 3 et 4 représentent chacune schématiquement une installation selon l'invention en vue de côté ;
- la figure 5 représente schématiquement une installation selon l'invention en vue de dessus.

La figure 1 montre une cuve 1 délimitée au moins par une paroi latérale 111 et une paroi 112 de fond. La cuve 1 comprend une ouverture 13 d'entrée et deux ouvertures 141, 142 de sortie.

Ces ouvertures 13, 141, 142 se trouvent sur la paroi latérale 111 de la cuve 1 et à proximité de la paroi 112 de fond. L'ouverture 142 de sortie est au-dessus de l'ouverture 141 de sortie.

Cette cuve 1 ou digesteur ou fermenteur, lorsque l'installation est en fonctionnement, inclut l'ensemble 15 de produits organiques en cours de dégradation et, au-dessus de cet ensemble 15, un gaz 16 appelé biogaz issu de cette dégradation.

En sortie de cuve 1, les produits organiques sont évacués par l'évacuation 3. Cette évacuation 3 peut amener les produits organiques vers des équipements de traitement aval.

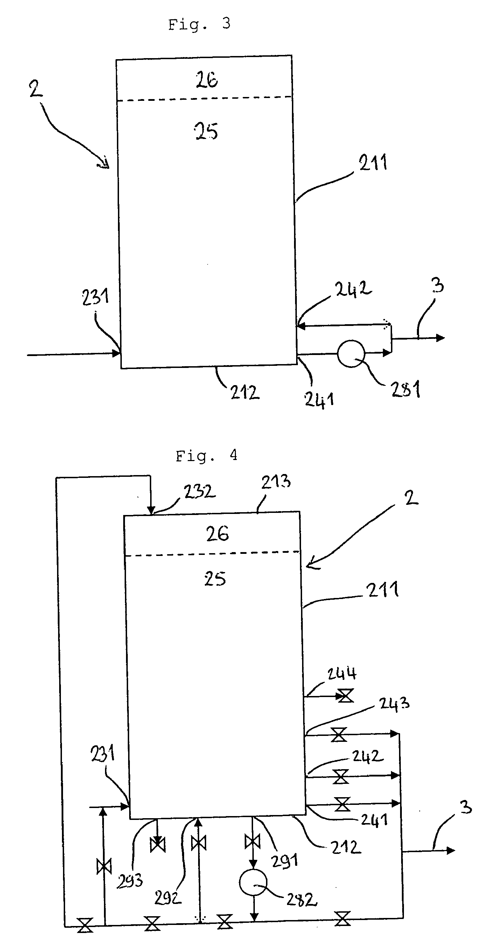

La figure 2 montre une cuve 1 incluant une paroi 17 interne médiane verticale. Les ouvertures 13, 141 et 142 se trouvent à proximité de cette paroi 17.

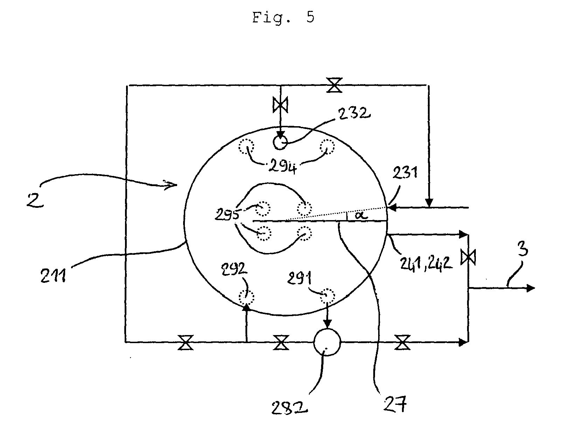

Selon l'invention, telle que schématisée à la figure 3, l'installation comprend une ouverture 231 d'entrée et des moyens pour refouler, ou moyens de refoulement, les produits organiques par exemple d'une ouverture 241 de sortie vers une ouverture 242 de sortie utilisée alors comme entrée.

La cuve 2 inclut l'ensemble 25 de produits organiques en cours de dégradation et, au-dessus de cet ensemble 25, un biogaz 26 issu de cette dégradation.

Les produits organiques traités dans une installation selon l'invention incluent en général des matières inertes indésirables.

Ces matières inertes indésirables en particulier ont tendance à provoquer une décantation et une accumulation de sédiments compacts en partie basse des digesteurs et/ou le long de leurs parois.

Les ouvertures 23, 241, 242 se trouvent sur la paroi 211 latérale, à proximité de la paroi 212 de fond.

Une pompe 281 est par exemple placée entre ces deux ouvertures 241, 242. Avantageusement, le sens de fonctionnement de la pompe 281 peut être inversé afin de refouler les produits organiques de l'ouverture 242 vers l'ouverture 241.

Une évacuation 3 générale est représentée. Cette évacuation 3 peut amener les produits organiques vers des équipements de traitement aval.

La figure 4 montre un autre mode de réalisation de l'invention. L'installation représentée à la figure 4 comprend des ouvertures supplémentaires par rapport à celle représentée à la figure 3. Les éléments communs aux figures 3 et 4 sont indiqués par les mêmes références numériques sur chacune de ces deux figures.

Dans cet autre mode de réalisation, l'installation comprend de manière avantageuse des ouvertures 231, 232 d'entrée et des ouvertures 241, 242, 243, 244, 291, 292, 293 de sortie, se trouvant dans des parties basse et/ou intermédiaire de la cuve.

La cuve 2 est composée virtuellement en hauteur de trois parties : une partie basse correspondant environ au tiers inférieur, une partie intermédiaire correspondant environ au tiers médian et une partie haute correspondant environ au tiers supérieur.

De préférence, les ouvertures se trouvent dans la partie basse de la cuve, soit sur la paroi 211 latérale soit sur la paroi 212 de fond.

Tout préférentiellement, l'installation comprend au moins une ouverture d'entrée et au moins une ouverture de sortie se trouvant sur la paroi 211 latérale de la cuve. Ces ouvertures se trouvent tout particulièrement dans une partie basse de la cuve.

Par exemple, sur la figure 4, la cuve 2 inclut des ouvertures 241, 242, 243 de sortie des produits organiques. Ces ouvertures sont en communication avec l'évacuation 3.

Selon un mode de réalisation de l'invention non représenté à la figure 4, ces ouvertures peuvent être en communication avec des moyens de refoulement.

Selon un mode préféré de réalisation de l'invention, la cuve 2 inclut, sur sa paroi 212 de fond, au moins une ouverture, soit d'entrée soit de sortie.

Par exemple, sur la figure 4, la paroi 212 de fond comprend trois ouvertures 291, 292, 293.

L'ouverture 291 de sortie est en communication avec l'évacuation 3 et avec des moyens de refoulement. Comme représenté sur la figure 4, une pompe 282 se trouve à la sortie de l'ouverture 291.

Cette pompe permet en particulier de refouler les produits organiques sortant de la cuve 2 par l'ouverture 291 vers l'ouverture 292 de sortie utilisée alors comme entrée.

L'ouverture 293 de sortie n'est reliée ni à l'évacuation ni aux moyens de refoulement. Cependant, elle peut l'être à tout moment si nécessaire, en particulier dans le cas où une autre ouverture de sortie se trouve bouchée pendant le fonctionnement de l'installation.

Quelques ouvertures peuvent se trouver dans la partie intermédiaire, et donc sur la paroi 211 latérale, de la cuve 2. Par exemple, sur la figure 4, une ouverture 244 de sortie se trouve dans le tiers médian de la cuve 2.

Cette ouverture 244, comme l'ouverture 293 sur la paroi 212 de fond, n'est pas reliée aux moyens de refoulement. Cependant, elle peut l'être à tout moment si nécessaire, en particulier dans le cas où une autre ouverture de sortie se trouve bouchée pendant le fonctionnement de l'installation.

Les ouvertures 244, 293 non raccordées mais raccordables sont équipées avantageusement de vannes de sectionnement et de brides supplémentaires permettant tout raccordement ultérieur en toute sécurité.

Selon une version avantageuse de l'invention, la cuve 2 inclut au moins une ouverture dans la partie haute de la cuve, soit sur la paroi 211 latérale soit sur une paroi 213 supérieure de la cuve 2. Par exemple, une ouverture 232 d'entrée se trouve dans la partie haute de la cuve, et plus particulièrement sur la paroi 213 supérieure.

Cette ouverture 232 ouvre, du côté intérieur de la cuve, sur le biogaz 26. On préfère qu'une telle ouverture soit une ouverture d'entrée de produits organiques.

Une ouverture de sortie de produits organiques peut se trouver, selon l'invention, dans la partie haute de la cuve 2, à condition d'être en-dessous de la surface de l'ensemble 25 de produits organiques.

Le biogaz est évacué pendant le fonctionnement de l'installation par des moyens connus d'évacuation, non représentés dans les figures.

La pompe 282 permet une recirculation de l'ouverture 291 vers l'ouverture 231 et vers l'ouverture 232. Une recirculation peut également être prévue vers un mélangeur, par exemple, placé en amont de l'ouverture 231 d'entrée des produits organiques.

L'invention permet d'envisager de multiples voies de recirculation, en incluant par exemple une ou plusieurs pompes. Par exemple, on peut prévoir à partir de l'installation représentée à la figure 4 une recirculation de l'ouverture 291 vers une au moins des ouvertures 241, 242, 243, 244 se trouvant sur la paroi 211 latérale. On peut aussi envisager une installation incluant deux pompes, combinant les caractéristiques des installations représentées aux figures 3 et 4.

La figure 5 est une représentation schématique d'une installation selon l'invention en vue de dessus. Les éléments communs aux figures 3, 4 et 5 sont indiqués par les mêmes références numériques.

Sur la figure 5, est représentée une installation incluant une cuve 2 présentant une paroi 27 interne médiane verticale. Cette paroi 27 a pour fonction d'imposer un certain trajet aux produits organiques de l'ensemble 25 dans la cuve 2, les produits organiques devant contourner cette paroi 27.

De préférence, la paroi 27 possède une extrémité en contact direct avec la paroi 211 latérale de la cuve. De manière avantageuse, elle occupe environ deux tiers d'une ligne médiane d'une cuve, par exemple environ deux tiers du diamètre de la cuve 2 cylindrique.

Chaque ouverture 231 d'entrée et 241, 242 de sortie se trouvant sur la paroi 211 latérale de la cuve 2 se trouve en outre avantageusement de part et d'autre et à proximité de la paroi 27. Plus précisément, les ouvertures 231, 241, 242 se trouvent à un angle α inférieur à 30°. L'angle α est l'angle formé au centre de la cuve 2 entre la paroi 27 et une ouverture se trouvant sur la paroi 211 latérale. De préférence, cet angle α est inférieur à 20°.

Les ouvertures 291, 292 se trouvant sur la paroi de fond sont représentées. La paroi de fond inclut en outre des ouvertures 294, 295. Chaque ouverture 294, 295 est tout préférentiellement une ouverture de sortie, pouvant être utilisée selon l'invention comme entrée par l'intermédiaire de moyens de refoulement.

De manière avantageuse, les ouvertures 291, 292, 294 se trouvent à proximité de la paroi 211 latérale. Plus précisément, chaque ouverture 291, 292, 294 se trouve à une distance maximale de 3 mètres de la paroi 211 latérale, de préférence de 2,5 mètres, et tout préférentiellement de 1,5 mètres.

Sont représentées également sur la figure 5 des ouvertures 295, qui sont de préférence des ouvertures de sortie, pouvant être utilisées selon l'invention comme entrées par l'intermédiaire de moyens de refoulement. Ces ouvertures 295 se trouvent sur la paroi de fond et de part et d'autre et à proximité de la paroi 27 interne médiane verticale. Plus précisément, chaque ouverture 295 se trouve à une distance maximale de 3 mètres de la paroi 27, de préférence de 2,5 mètres, et tout préférentiellement de 1,5 mètres.

De préférence, on cherche à éviter les phénomènes de passage direct entre une zone d'aspiration et une zone de refoulement. Pour cela, on espace ces zones d'aspiration et de refoulement. Par exemple, pour une cuve selon l'invention comprenant trois ouvertures sur sa paroi latérale, une première ouverture peut se trouver jusqu'à 50 centimètres du fond de la cuve, de préférence jusqu'à 30 centimètres, une deuxième ouverture peut se trouver à plus d'1 mètre du fond, de préférence à plus d'1,5 mètres du fond, et une troisième ouverture peut se trouver à plus d'1,5 mètres du fond, de préférence à plus de 2,5 mètres du fond.

De manière avantageuse, les ouvertures sur la paroi latérale sont espacées d'au moins 1 mètre, tout préférentiellement d'au moins 2 mètres.

Le respect de ces distances minimales est préférable pour éviter le bouchage par talutage naturel, en particulier lorsque les ouvertures sur la paroi latérale sont sensiblement alignées verticalement.

Les ouvertures sur la paroi latérale peuvent être sensiblement alignées verticalement ou décalées les unes par rapport aux autres.

Sur les figures 4 et 5, une seule évacuation générale 3 est prévue. Toutefois, plusieurs évacuations peuvent être incluses dans une installation selon l'invention.

L'invention concerne toute forme de cuve, telle qu'une cuve cylindrique ou une cuve parallélépipédique, à fond plat ou à fond conique. On préfère une cuve cylindrique à fond plat, tout préférentiellement munie d'une paroi interne médiane verticale.

Par exemple, la cuve est une cuve cylindrique et mesure entre 20 et 30 mètres de haut et entre 10 et 15 mètres de diamètre.

Avantageusement, les ouvertures dans la cuve ont une taille comprise entre 100 et 700 mm. De préférence, les ouvertures d'entrée ont une taille comprise entre 100 et 400 mm et les ouvertures de sortie ont une taille comprise entre 300 et 500 mm.

Comme représenté aux figures 4 et 5, l'installation selon l'invention inclut avantageusement des conduits munis de vannes. Ces vannes peuvent être manuelles ou automatisées. Une vanne manuelle peut être doublée d'une vanne automatisée et vice versa.

Le contrôle des vanne(s) et pompe(s) éventuelles de l'installation est de préférence automatisé.

L'installation selon l'invention permet de réaliser sélectivement une évacuation par au moins une ouverture sur la paroi latérale, une évacuation par au moins une ouverture sur la paroi de fond, et/ou une recirculation par au moins une des différentes voies possibles. On évite ainsi toute accumulation ou extension de zones de décantation de matières lourdes en fond de digesteur.

L'installation selon l'invention est utilisée principalement pour la méthanisation de déchets solides et/ou liquides pouvant contenir des matières inertes indésirables, telles que par exemple du sable et des morceaux de verre.

Les produits organiques selon l'invention sont principalement des déchets issus des ordures ménagères et assimilés, de l'agriculture, du traitement des eaux, et/ou de l'industrie.

En général, on introduit dans la cuve une boue à environ 30% de matière sèche. Dans l'invention, on peut traiter des boues contenant entre 15% et 40% de matière sèche.

L'installation selon l'invention permet de garantir l'absence de tout phénomène irrémédiable de bouchage de digesteur et de réduction du volume utile d'un digesteur, tant dans le cadre d'un aménagement d'installations existantes que dans celui de la conception de nouveaux digesteurs à construire.

## Revendications

1. Installation pour réaliser une dégradation biologique d'un ensemble de produits organiques, comprenant une cuve (2) délimitée au moins par une paroi (211) latérale et une paroi (212) de fond, ladite cuve (2) comprenant au moins une ouverture (231, 232, 242, 292, 294, 295) d'entrée et au moins une ouverture (241, 242, 243, 244, 291, 293, 294, 295) de sortie ; ladite installation étant **caractérisée en ce que** chaque ouverture (231, 242, 292) d'entrée ou (241, 242, 243, 244, 291, 293) de sortie se trouve sur la paroi (211) latérale ou sur la paroi (212) de fond, et **en ce qu'**elle comprend des moyens pour refouler sélectivement les produits organiques d'au moins une ouverture (231, 232, 242, 292, 294, 295) d'entrée ou (241, 242, 243, 244, 291, 293, 294, 295) de sortie vers au moins une autre ouverture (231, 232, 242, 292, 294, 295) d'entrée ou (241, 242, 243, 244, 291, 293, 294, 295) de sortie.

2. Installation selon la revendication 1, dans laquelle les moyens pour refouler les produits organiques comprennent au moins une pompe (281).

3. Installation selon la revendication 1 ou 2, dans laquelle au moins une ouverture (231, 242, 292, 294, 295) d'entrée et au moins une ouverture (241, 242, 243, 244, 291, 293, 294, 295) de sortie se trouvent dans une partie basse et/ou intermédiaire de la cuve (2), de préférence dans la partie basse de la cuve (2).

4. Installation selon l'une quelconque des revendications 1 à 3, dans laquelle au moins une ouverture (231, 242) d'entrée et au moins une ouverture (241, 242, 243, 244) de sortie se trouvent sur la paroi (211) latérale de la cuve (2) et de préférence dans une partie basse de la cuve (2).

5. Installation selon l'une quelconque des revendications 1 à 4, dans laquelle chaque ouverture (231, 241, 242, 243, 244) sur la paroi (211) latérale se trouve de part et d'autre et à proximité d'une paroi (27) interne médiane verticale, ladite paroi (27) interne se trouvant dans la cuve (2).

6. Installation selon l'une quelconque des revendications 1 à 5, dans laquelle au moins une ouverture (291, 292, 293, 294, 295), de préférence au moins une ouverture (291, 293) de sortie, se trouve sur la paroi (212) de fond de la cuve.

7. Installation selon l'une quelconque des revendications 1 à 6, dans laquelle au moins deux ouvertures (291, 292, 294), de préférence des ouvertures (291, 294) de sortie, se trouvent sur la paroi (212) de fond et à proximité de la paroi (211) latérale.

8. Installation selon l'une quelconque des revendications 1 à 7, dans laquelle au moins deux ouvertures (295), de préférence des ouvertures (295) de sortie, se trouvent sur la paroi (212) de fond et de part et d'autre et à proximité d'une paroi (27) interne médiane verticale, ladite paroi (27) interne se trouvant dans la cuve (2).

9. Installation selon l'une quelconque des revendications 1 à 8, comprenant au moins une ouverture , de préférence une ouverture (232) d'entrée, dans une partie haute de la cuve (2).

10. Installation selon l'une quelconque des revendications 1 à 9, dans laquelle la cuve (2) est en outre délimitée par une paroi (213) supérieure comprenant au moins une ouverture, de préférence une ouverture (232) d'entrée.
